# DEMANDE DE BREVET EUROPEEN

(11) **EP 0 836 103 A1**
(43) Date de publication de la demande: **15.04.1998**
(21) Numéro de dépôt: 97402342.6
(22) Date de dépôt: 06.10.1997
(51) Int. Cl.: G02B 6/28, G02B 6/42

(54) **Dispositif de connexion pour fibre optique multicoeur, à base d'éléments optiques en espace libre**

(30) Priorité: 08.10.1996 FR 9612240
(71) Demandeur: FRANCE TELECOM, 75015 Paris (FR)
(72) Inventeur: De Bougreney de la Tocnay, Jean-Louis, 29290 Saint Renan (FR); Chevallier, Raymond, 29280 Locmaria-Plouzane (FR); Heggarty, Kévin, 29280 Locmaria-Plouzane (FR); Defosse, Yves, 29280 Locmaria-Plouzane (FR)
(74) Mandataire: Dubois-Chabert, Guy

(57) **Abrégé**

Ce dispositif comprend un premier moyen optique (36) qui est réfractif ou diffractif et au moins un deuxième moyen optique (38, 40) qui est diffractif. Le premier moyen fait diverger des faisceaux lumineux sortant des coeurs (30) de la fibre (28) jusqu'à une zone où ces faisceaux sont séparés spatialement et ont des sections transversales de tailles compatibles avec la bande passante spatiale du deuxième moyen. Celui-ci est placé dans cette zone et dirige les faisceaux, indépendamment les uns des autres, vers des composants optiques correspondants (34). Application aux télécommunications optiques.

## Description

### DOMAINE TECHNIQUE

La présente invention concerne un dispositif de connexion pour fibre optique multicoeur.

Elle s'applique notamment au domaine des télécommunications optiques.

### ÉTAT DE LA TECHNIQUE ANTÉRIEURE

Une fibre optique multicoeur est susceptible d'avoir le diamètre extérieur d'une fibre optique monomode standard à un seul coeur (125 µm), mais elle contient une pluralité de coeurs, typiquement de 4 à 10 coeurs.

De préférence, le diamètre de ceux-ci est sensiblement égal à celui du coeur d'une fibre monomode (8 µm) et ces coeurs sont séparés d'environ 40 µm.

Au sujet des fibres optiques multicoeurs, on consultera les documents (1) à (4) qui, comme les autres documents cités par la suite, sont mentionnés à la fin de la présente description.

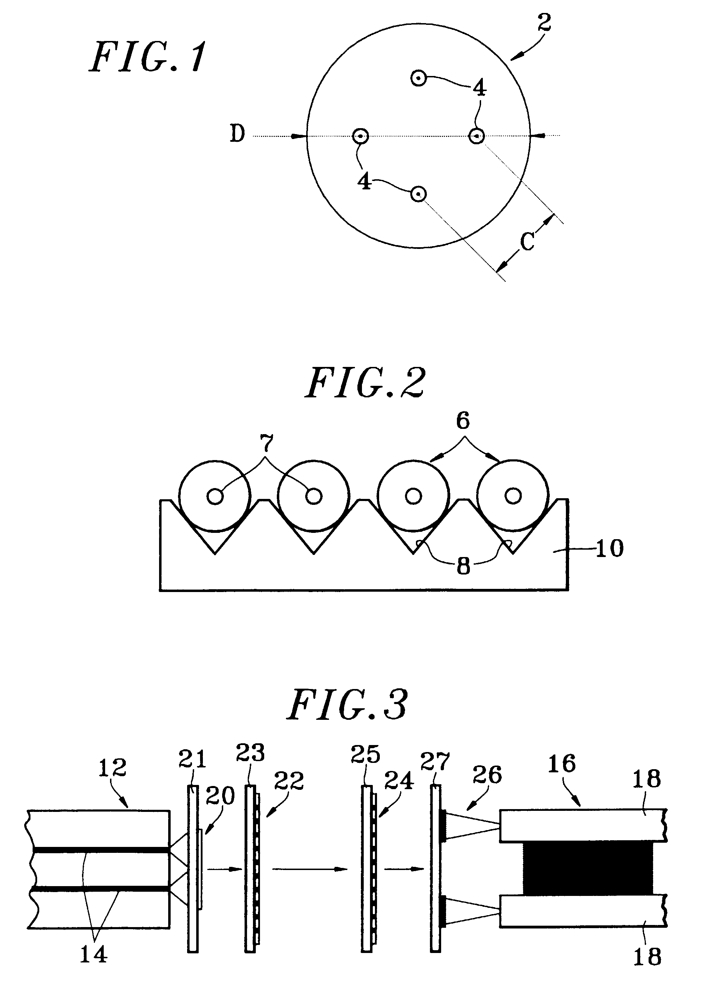

Un exemple de fibre optique multicoeur 2 est schématiquement représenté en coupe transversale sur la figure 1 des dessins annexés.

Dans cet exemple, la fibre multicoeur 2, de diamètre extérieur D égal à 125 µm, contient quatre coeurs référencés 4, qui sont disposés aux sommets d'un carré de côté C égal à 44,2 µm.

Les zones de gaine optique entourant ces coeurs ne sont pas représentées sur la figure 1.

Les fibres optiques multicoeurs permettent d'augmenter sensiblement le débit par fibre ainsi que de réduire le poids, l'encombrement et donc le coût total de fabrication et d'installation par guide optique monomode (par rapport aux fibres monomodes connues à un seul coeur).

Cependant, l'introduction de ces fibres multicoeurs dans les réseaux de télécommunication suppose la compatibilité et surtout la possibilité de connexion avec différents composants d'extrémité.

Ces composants peuvent être purement optiques ou optoélectroniques.

En outre, ils peuvent être actifs ou passifs.

Ces composants peuvent être par exemple des barrettes ou des matrices de fibres optiques (à un seul coeur), des guides optiques plans, des photodétecteurs matriciels, des matrices de lasers ou des VCSELs c'est-à-dire des lasers à émission par la surface à cavité verticale *("Vertical Cavity Surface Emitting Lasers").*

À titre d'exemple, la figure 2 montre schématiquement une barrette de fibres optiques 6 (à un seul coeur 7) qui sont respectivement placées dans des rainures 8 en forme de V, réalisées dans un support approprié 10.

Certes, on connaît des dispositifs de connexion de fibres optiques multicoeurs à des composants d'extrémité mais il s'agit de dispositifs utilisant des guides d'ondes optiques.

Ceux-ci présentent l'inconvénient de ne pas être adaptés aux connexions de géométries quelconques et de sortances (« fan out ») élevées.

### EXPOSÉ DE L'INVENTION

La présente invention résout le problème du raccordement d'une fibre optique multicoeur à un composant optique ou optoélectronique tout en permettant des reconfigurations quelconques et avec des sortances élevées.

Pour ce faire, la présente invention utilise une connexion en espace libre.

De façon précise, la présente invention a pour objet un dispositif de connexion destiné à connecter une fibre optique multicoeur à un composant optique d'extrémité ou inversement, la fibre comprenant N coeurs, N étant un nombre entier au moins égal à 2, le composant optique d'extrémité comprenant P composants optiques élémentaires, P étant un nombre entier au moins égal à 2, de manière à établir des liaisons optiques entre les N coeurs et les P composants élémentaires, ce dispositif étant caractérisé en ce qu'il comprend :
- un premier moyen optique qui est réfractif ou diffractif, et
- au moins un deuxième moyen optique qui est diffractif,
le premier moyen optique étant apte à faire diverger des faisceaux lumineux sortant des N coeurs jusqu'à une zone où ces faisceaux sont séparés spatialement et ont des sections transversales de tailles compatibles avec la bande passante spatiale du deuxième moyen optique, ce deuxième moyen optique étant placé dans cette zone et étant apte à diriger les faisceaux lumineux, indépendamment les uns des autres, vers les composants élémentaires correspondants.

Par "composant (élémentaire) optique", on entend un composant (élémentaire) soit purement optique soit opto-électronique.

Le premier moyen optique peut être une lentille.

Selon un premier mode de réalisation particulier du dispositif objet de l'invention, N est égal à P et le deuxième moyen optique est apte à envoyer la lumière sortant de chaque coeur vers un seul composant élémentaire.

Selon un deuxième mode de réalisation particulier, le deuxième moyen optique est apte à envoyer la lumière sortant d'au moins l'un des N coeurs vers une pluralité des P composants élémentaires.

Selon un troisième mode de réalisation particulier, le deuxième moyen optique est apte à envoyer la lumière sortant d'au moins deux des N coeurs vers un seul des P composants élémentaires.

Le dispositif objet de l'invention peut comprendre en outre au moins un troisième moyen optique qui est réfractif ou diffractif et apte à effectuer une adaptation de mode pour le composant optique d'extrémité.

Les premier, deuxième et troisième moyens optiques peuvent être
- respectivement formés sur des substrats indépendants les uns des autres et transparents aux faisceaux lumineux,
- ou groupés par deux, les moyens optiques d'un même groupe étant respectivement formés sur deux faces opposées d'un même substrat transparent aux faisceaux lumineux,
- ou formés sur un même substrat transparent aux faisceaux lumineux, certains des premier, deuxième et troisième moyens optiques fonctionnant par réflexion de manière à permettre l'établissement d'une liaison optique entre ces premier, deuxième et troisième moyens optiques.

Ceux des premier, deuxième et troisième moyens optiques qui sont réfractifs peuvent être choisis dans le groupe comprenant les micro-lentilles et les micro-prismes.

Ceux des premier, deuxième et troisième moyens optiques qui sont diffractifs peuvent être choisis dans le groupe comprenant les hologrammes analogiques optiques enregistrés dans un matériau photosensible et les hologrammes optiques engendrés par ordinateur.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1, déjà décrite, est une vue en coupe transversale schématique d'un exemple de fibre optique multicoeur,
- la figure 2, déjà décrite, est une vue en coupe transversale schématique d'une barrette de fibres optiques monomodes,
- la figure 3 illustre schématiquement le principe de la présente invention,
- la figure 4 est une vue schématique d'un mode de réalisation particulier du dispositif objet de l'invention,
- les figures 5 et 6 montrent l'allure des faisceaux lumineux issus des coeurs de la fibre utilisant le dispositif de la figure 4 respectivement sans micro-prismes et avec micro-prismes à la sortie de la fibre, et
- les figures 7 à 10 illustrent schématiquement des variantes de réalisation du dispositif de la figure 4.

### EXPOSÉ DÉTAILLÉ DE MODES DE RÉALISATION PARTICULIERS

La figure 3 est une vue en coupe transversale schématique d'un dispositif conforme à l'invention.

Ce dispositif est destiné à raccorder une fibre optique multicoeur 12 comprenant plusieurs coeurs 14, dont deux sont représentés sur la figure 3, à un composant optique de sortie 16 comprenant plusieurs composants optiques élémentaires 18, dont deux sont représentés sur la figure 3.

Ce dispositif permet de relier optiquement les coeurs 14 de la fibre 12 respectivement aux composants élémentaires 18, chaque coeur étant ainsi optiquement relié à un composant élémentaire.

Conformément à la présente invention, le dispositif de la figure 3 utilise des connexions en espace libre.

On pourra consulter le document (5) à ce sujet.

Ces connexions sont réalisées au moyen d'une pluralité d'ensembles d'éléments micro-optiques diffractifs et/ou réfractifs 20, 22, 24 et 26.

Au moins l'un de ces ensembles est composé d'éléments micro-optiques diffractifs et a la référence 22 sur la figure 3.

Le choix de connexions en espace libre résulte de la configuration bi-dimensionnelle de la sortie de la fibre multicoeur 12 et de la nécessité de raccorder cette fibre à un composant ayant une autre configuration (par exemple une barrette de fibres optiques comprenant chacune un seul coeur), ce composant conduisant à une solution de raccord qui utilise les trois dimensions de l'espace.

L'utilisation d'au moins un ensemble 22 d'éléments micro-optiques diffractifs résulte du besoin de réaliser des fonctions complexes et variées d'interconnexion avec éventuellement une grande "sortance" *("fan out").*

Les éléments diffractifs permettent de réaliser de telles fonctions avec un faible coût et un faible encombrement.

A ce sujet, on consultera le document (6).

L'utilisation d'une pluralité d'ensembles d'éléments micro-optiques résulte du double besoin de transformation de configuration et d'adaptation de mode pour la fibre optique multicoeur 12 et éventuellement pour le composant d'extrémité 16.

Plus précisément, le premier ensemble d'éléments micro-optiques 20 autorise la divergence des faisceaux lumineux issus des coeurs de la fibre 12 jusqu'à une zone où ces faisceaux sont séparés spatialement et où les sections transversales de ces faisceaux ont des tailles compatibles avec le produit espace x bande (bande passante spatiale) de l'ensemble 22 d'éléments micro-optiques diffractifs.

Cet ensemble 22 d'éléments micro-optiques diffractifs 22 est placé dans cette zone et a pour fonction de diriger, indépendamment les uns des autres, les faisceaux lumineux sortant des coeurs 14 de la fibre 12 sur les composants élémentaires 18.

L'ensemble 24 du dispositif de la figure 3 a pour fonction de redresser les faisceaux lumineux qui lui parviennent pour les mettre dans l'axe des composants élémentaires 18.

Dans le cas où il y a besoin d'une adaptation de mode pour le composant d'extrémité 16 (par exemple dans le cas où ce dernier est un guide optique plan), il est nécessaire d'utiliser, en plus des ensembles 20 et 22, au moins un ensemble supplémentaire d'éléments micro-optiques pour effectuer cette adaptation.

Dans le cas de la figure 3, il y a deux tels ensembles supplémentaires 24 et 26.

Par exemple, on peut avoir à injecter la lumière issue des coeurs de la fibre 12 dans une barrette ou une matrice de fibres optiques monomodes standards (à un seul coeur) où l'on doit, pour obtenir des taux de couplage corrects, injecter la lumière dans les fibres suivant les axes de celles-ci et avec la bonne ouverture numérique.

D'une manière générale, un dispositif conforme à l'invention comprend au moins deux ensembles d'éléments micro-optiques et au moins trois tels ensembles lorsque, en plus de l'adaptation de mode pour la fibre optique multicoeurs, il faut une adaptation de mode pour le composant d'extrémité.

Dans certains cas, par exemple lorsque la transformation de configuration ou l'adaptation de mode est particulièrement compliquée, on peut décider d'utiliser un plus grand nombre d'ensembles d'éléments micro-optiques afin d'alléger notamment les contraintes de réalisation technologique de ces ensembles.

Il est à noter que l'introduction d'ensembles supplémentaires d'éléments micro-optiques dotent un dispositif conforme à l'invention d'une plus grande souplesse d'emploi du fait :
- de la possibilité de choisir les éléments micro-optiques les mieux adaptés à la fonction à réaliser (par exemple des éléments réfractifs pour la focalisation,
- de la possibilité de corriger les aberrations en utilisant le couplage de deux éléments (par exemple comme pour un objectif achromat), et
- de la possibilité d'achromatiser le dispositif pour des longueurs d'onde déterminées (par exemple 1,55 µm et 1,3 µm pour les télécommunications optiques) ou pour des plages déterminées de longueurs d'onde (par exemple une plage de 40 nm pour les télécommunications optiques).

On pourra consulter les documents (7) et (8) au sujet de cette dernière possibilité.

Pour la réalisation des éléments micro-optique diffractifs nécessaires à la présente invention, plusieurs techniques sont envisageables.

On peut par exemple enregistrer de tels éléments diffractifs en tant qu'hologrammes analogiques optiques standards dans un matériau photosensible comme par exemple la gélatine bichromatée.

Cependant, compte tenu des besoins de fonctions complexes d'interconnexion, il est préférable d'utiliser des hologrammes synthétisés par ordinateur.

En ce qui concerne les techniques de calcul et de réalisation de tels éléments diffractifs synthétisés, on pourra consulter les documents (6) et (9).

De la même manière, afin de réduire les pertes introduites par le dispositif, il est préférable d'utiliser des éléments diffractifs à haute efficacité de diffraction, ce qui implique l'utilisation d'éléments à plusieurs niveaux de phase, qui sont par exemple gravés dans du verre, ou des éléments de profil continu.

On consultera le document (11) à ce sujet.

Pour les éléments micro-optiques réfractifs, plusieurs techniques de réalisation sont également envisageables.

On consultera le document (10) à ce sujet.

On peut par exemple utiliser une fusion de résine photosensible *("photoresist"),* une irradiation protonique de polyméthylmétacrylate, une gravure de silice ou un échange ionique.

Il est à noter que l'on connaît diverses techniques de duplication à faible coût des éléments micro-optiques diffractifs et des éléments micro-optiques réfractifs.

On peut par exemple utiliser les techniques de moulage et d'emboutissage.

On consultera le document (11) à ce sujet.

L'utilisation de ces techniques permet de réduire sensiblement les coûts de production de masse de dispositifs conformes à la présente invention et donc d'accroître la compétitivité de ceux-ci.

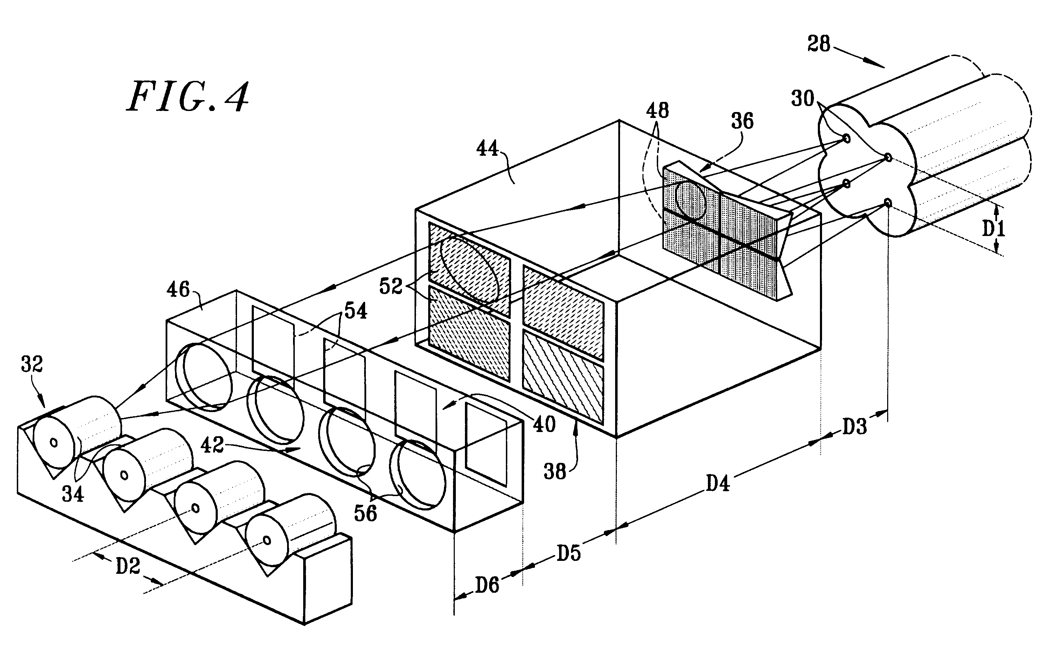

La figure 4 illustre schématiquement l'application de la présente invention à la connexion d'une fibre optique multicoeurs 28, ayant quatre coeurs 30, à une barrette 32 de quatre fibres optiques monomodes standards 34 qui n'ont chacune qu'un seul coeur.

Le dispositif de connexion conforme à la présente invention, qui est schématiquement représenté sur la figure 4, comprend quatre ensembles d'éléments micro-optiques.

Ces ensembles ont respectivement les références 36, 38, 40 et 42 lorsque l'on va de la fibre 28 à la barrette 32 et fonctionnent tous par transmission.

Dans l'exemple représenté sur la figure 4, les ensembles 36 et 38 sont formés sur deux faces planes, parallèles et opposées d'un même substrat parallélépipédique 44 qui est transparent à la lumière issue des coeurs de la fibre 28.

De même, les ensembles 40 et 42 sont formés sur deux faces planes, parallèles et opposées d'un même substrat parallélépipédique 46 qui est transparent à cette lumière.

À titre purement indicatif et nullement limitatif :
- la distance D1 entre deux coeurs adjacents de la fibre 28 est égale à 44,2 µm,
- la distance D2 entre les axes de deux fibres monomodes adjacentes de la barrette 32 est égale à 250 µm,
- la distance D3 entre la face du substrat 44 qui porte l'ensemble 36 et l'extrémité de la fibre placée en regard de cet ensemble 36 est environ égale à 200 µm,
- la distance D4 entre les faces du substrat 44 portant respectivement les ensembles 36 et 38 est de l'ordre de 1 à 2 mm,
- la distance D5 entre les faces des substrats 44 et 46 qui sont placées en regard l'une de l'autre et qui portent respectivement les ensembles 38 et 40 est de l'ordre de 1 mm, et
- la distance D6 entre les faces du substrat 46 qui portent respectivement les ensembles 40 et 42 est environ égale à 1 mm.

Le premier ensemble 36 est un ensemble de micro-prismes 48.

Il y a quatre micro-prismes dans l'exemple représenté et ils sont respectivement associés aux quatre coeurs de la fibre 28.

Ces micro-prismes 48 ont pour fonction de séparer angulairement les faisceaux lumineux respectivement issus des coeurs 30 de la fibre 28 de manière à pouvoir les laisser diverger suffisamment pour obtenir un produit espace x bande compatible avec l'utilisation d'éléments micro-optiques diffractifs, sans qu'il y ait recouvrement des faisceaux lumineux issus des différents coeurs.

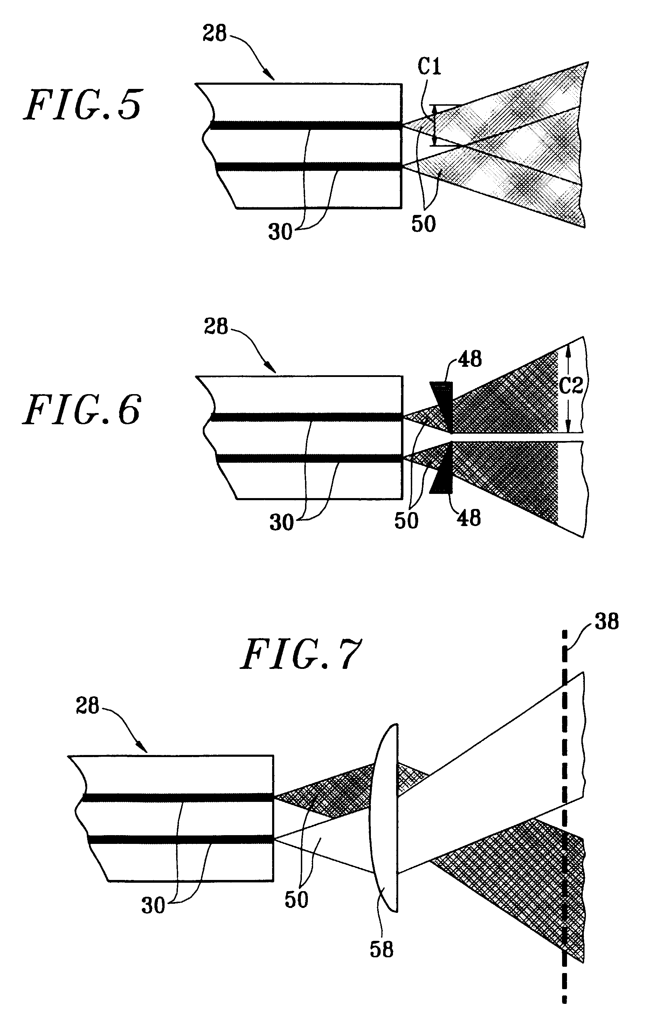

Ceci est schématiquement illustré par les figures 5 et 6.

La figure 5 montre en coupe transversale schématique la fibre 28 dont on voit deux des coeurs 30 ainsi que les deux faisceaux lumineux 50 respectivement issus de ces coeurs 30, en l'absence de micro-prisme à la suite de la fibre 28.

Il y a alors un recouvrement de ces faisceaux lumineux 50, le champ optique C1 étant de l'ordre de 40 µm.

Au contraire, lorsqu'on utilise les micro-prismes 48 (figure 6), ces micro-prismes permettent la séparation des faisceaux 50 et l'on obtient à une distance déterminée des micro-prismes 48 un champ optique C2 de l'ordre de 500 µm.

L'utilisation de l'ensemble 36 de micro-prismes 48 permet d'utiliser le deuxième ensemble 38 formé d'éléments diffractifs 52 et le troisième ensemble 40 également formé d'éléments diffractifs 54.

Ces ensembles comportent chacun autant d'éléments diffractifs qu'il existe de coeurs dans la fibre 28 (quatre dans l'exemple représenté sur la figure 4).

Les ensembles 38 et 40 sont des hologrammes formés d'hologrammes élémentaires qui constituent respectivement les éléments 52 et 54.

Les hologrammes 52 de l'ensemble 38 sont respectivement associés aux hologrammes 54 de l'ensemble 40.

On obtient ainsi des "doublets" d'hologrammes.

Ces doublets permettent de redresser angulairement les faisceaux lumineux, d'adapter la convergence de ceux-ci et de réaliser une transformation de coordonnées c'est-à-dire le passage d'une configuration tridimensionnelle (fibre 28) à une configuration bidimensionnelle (barrette 32).

Le fait que ces hologrammes aient plusieurs fonctions justifient l'utilisation d'éléments diffractifs dans la présente invention.

De plus, l'utilisation de plusieurs ensembles d'éléments micro-optiques facilite l'achromatisation du dispositif (voir les documents (7) et (8)), comme on l'a vu plus haut.

Le quatrième ensemble 42 d'éléments micro-optiques est composé de micro-lentilles 56 qui sont respectivement associées aux doublets mentionnés plus haut et destinées à optimiser le couplage optique dans les fibres 34.

On peut utiliser des micro-lentilles diffractives ou des micro-lentilles réfractives.

Le choix se fait en fonction de critères tels que l'efficacité, la compatibilité technologique et la facilité de miniaturisation.

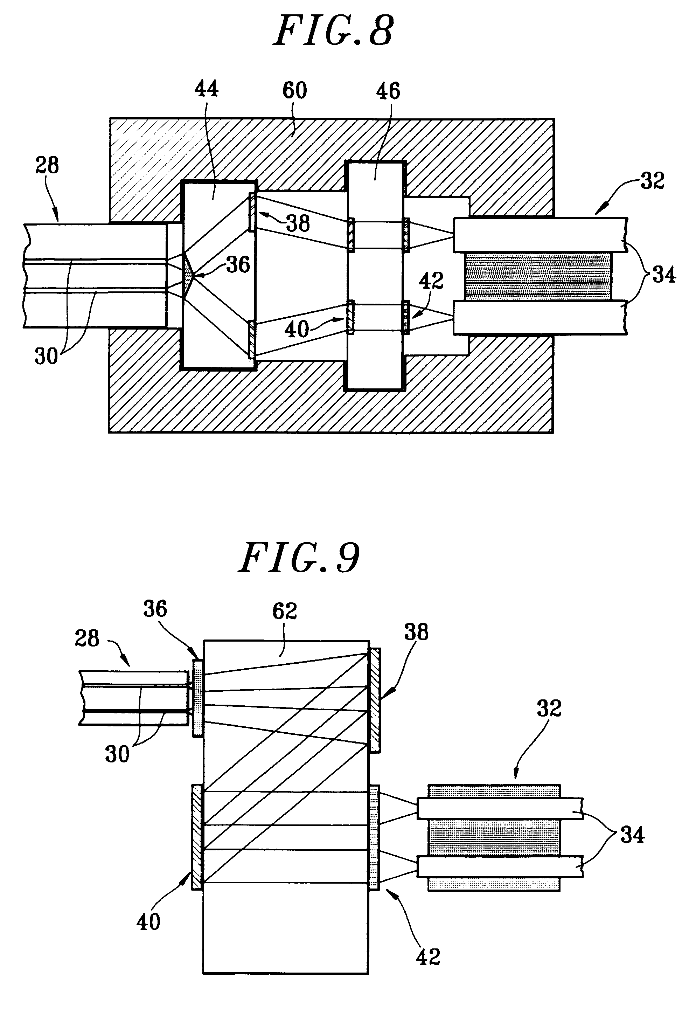

A la place du premier ensemble 36 composé d'éléments micro-optiques 48 on peut utiliser une micro-lentille 58 comme l'illustre schématiquement la figure 7.

Cette micro-lentille 58 peut être réfractive voire même diffractive.

De plus, cette micro-lentille 58 peut être convergente ou divergente.

Dans le cas d'une lentille convergente (cas de la figure 7), les faisceaux lumineux 50 issus des coeurs 30 de la fibre multicoeur 28 se croisent à la sortie de cette micro-lentille 58 et se séparent à nouveau avant l'ensemble 38 d'éléments diffractifs.

De plus, au lieu de servir à réaliser une fonction de connexion de type 1 vers 1, le dispositif objet de l'invention peut servir à réaliser une fonction de distribution de type 1 vers N.

Ainsi, au lieu d'envoyer la lumière sortant d'un coeur de la fibre multicoeur dans une seule zone du composant de sortie (par exemple une fibre optique parmi plusieurs fibres optiques d'une barrette de fibres optiques monomodes), ce qui correspond à une connexion de type 1 vers 1, les éléments diffractifs peuvent être déterminés de manière à répartir la lumière sortant d'un coeur de la fibre multicoeur sur plusieurs zones du composant de sortie et, par exemple, à injecter cette lumière dans plusieurs fibres de la barrette.

Ceci peut se faire pour tous les coeurs de la fibre multicoeur ou pour seulement certains d'entre eux.

La répartition de lumière peut être faite de manière égale ou inégale et le nombre de zones du composant de sortie peut être différent du nombre de coeurs de la fibre multicoeur.

La présente invention peut également servir à réaliser une fonction de "fusion" de type N vers 1.

Ainsi, au lieu d'envoyer la lumière sortant d'un coeur de la fibre multicoeur dans une seule zone du composant de sortie, ce qui constitue une connexion de type 1 vers 1, les éléments diffractifs peuvent être conçus de manière à diriger la lumière sortant de plusieurs coeurs de la fibre multicoeur dans la même zone du composant de sortie, par exemple dans la même fibre optique d'une barrette de fibres optiques monomodes.

Ceci peut être fait pour tous les coeurs de la fibre multicoeur et toutes les zones du composant de sortie ou seulement certains d'entre eux.

Pour une zone du composant de sortie, les contributions provenant des différents coeurs de la fibre multicoeur peuvent se faire à parts égales ou inégales.

Le nombre de zones du composant de sortie peut être différents du nombre de coeurs de la fibre multicoeur.

De la même façon, un dispositif conforme à l'invention comme par exemple celui de la figure 4 peut être utilisé "à l'envers", par exemple pour connecter, à une fibre multicoeur, une barrette ou une matrice de fibres optiques monomodes (à un seul coeur) ou des guides optiques plans ou encore des sources lumineuses telles que des VCSELs.

La lumière sortant des fibres de la barrette (ou de la matrice ou des guides plans ou des VCSELs par exemple) est alors injectée dans les coeurs de la fibre multicoeur.

Les ensembles d'éléments diffractifs et les ensembles d'éléments réfractifs peuvent être respectivement réalisés sur des substrats indépendants et montés comme un objectif photographique à éléments multiples.

Ceci est schématiquement illustré par la figure 3 sur laquelle les substrats associés aux ensembles 20, 22, 24 et 26 ont respectivement les références 21, 23, 25 et 27.

En variante, ces ensembles sont réalisés par paire, les deux ensembles d'une même paire étant réalisés sur deux faces opposées d'un même substrat transparent comme l'illustrent schématiquement la figure 4 et la figure 8.

La figure 8 reprend en fait les différents composants de la figure 4.

Ces composants sont montés dans un support approprié 60 qui maintient également l'extrémité de la fibre multicoeur 28 ainsi que l'extrémité du composant de sortie 32, extrémités qui sont destinées à être optiquement reliées l'une à l'autre.

Les ensembles d'éléments diffractifs et les ensembles d'éléments réfractifs peuvent également être réalisés tous sur un même substrat transparent à la lumière issue des coeurs de la fibre optique multicoeur.

Ces ensembles peuvent alors être réalisés sur une face de ce substrat ou sur les deux faces de celui-ci.

La lumière fait alors un ou plusieurs allers-retours à l'intérieur du substrat grâce à des traitements réfléchissants prévus à cet effet et appliqués à ce substrat.

Ceci est schématiquement illustré par la figure 9 où l'on voit la fibre optique multicoeur 28 ainsi que le composant de sortie 32 que l'on veut optiquement relier à cette fibre 28.

On voit également un substrat 62 transparent à la lumière issue des coeurs 30 de la fibre optique multicoeur 28.

Dans le cas du dispositif de la figure 9, on utilise les mêmes ensembles d'éléments micro-optiques que dans le cas de la figure 4 et ces ensembles ont les mêmes références que celles qu'ils ont sur cette figure 4 mais, dans le cas de la figure 9, les ensembles 36 et 42 fonctionnent encore par transmission alors que les ensembles 38 et 40 fonctionnent par réflexion.

Les ensembles 36 et 40 sont disposés sur une première face du substrat 62, l'ensemble 36 se trouvant en regard de la fibre 28.

Les ensembles 38 et 42 sont disposés sur une deuxième face du substrat 62, l'ensemble 42 se trouvant en regard du composant 32.

Les positionnements relatifs des ensembles 36, 38, 40 et 42 sont tels que les faisceaux lumineux issus des coeurs de la fibre 28 traversent l'ensemble 36 (et interagissent avec celui-ci) puis traversent le substrat 62, se réfléchissent sur l'ensemble 38 (et sont diffractés par celui-ci), traversent à nouveau le substrat 62, se réfléchissent sur l'ensemble 40 (et sont diffractés par celui-ci), traversent encore une fois le substrat 62 puis traversent l'ensemble 42 (en interagissant avec celui-ci) et atteignent finalement le composant 32.

Le dispositif conforme à l'invention, qui est schématiquement représenté sur la figure 9, est particulièrement intéressant car il permet de reporter les problèmes "d'alignement" des divers organes qui le composent sur la réalisation technologique et permet également de réduire le nombre d'interfaces et donc de pertes dues aux réflexions.

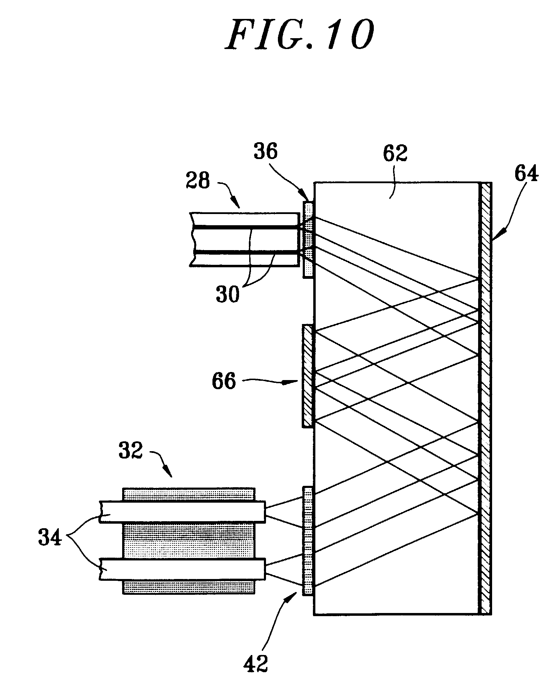

La figure 10 illustre schématiquement une variante de réalisation du dispositif de la figure 9.

Dans le cas de la figure 10, les ensembles 36 et 42 fonctionnent par transmission et sont formés (gravés) sur la première face du substrat 62.

La fibre 28 se trouve encore en regard de l'ensemble 36.

Le composant 32 se trouve encore en regard de l'ensemble 42.

La deuxième face du substrat 62 est recouverte d'une couche réflectrice 64.

A la place des ensembles 38 et 40 de la figure 9, le dispositif de la figure 10 comprend un ensemble 66 d'éléments micro-optiques diffractifs fonctionnant par réflexion.

Cet ensemble 66 est placé sur la première face du substrat 62, entre les ensembles 36 et 42.

Les positionnements relatifs des ensembles 36, 66 et 42 sont tels que les faisceaux lumineux issus des coeurs de la fibre 28 traversent l'ensemble 36 (et interagissent avec celui-ci) puis traversent le substrat 62, se réfléchissent sur la couche 64, traversent à nouveau le substrat 62, se réfléchissent sur l'ensemble 66 (et sont diffractés par celui-ci), traversent encore une fois le substrat 62, retraversent celui-ci après réflexion sur la couche 64 puis traversent l'ensemble 42 (en interagissant avec celui-ci) et atteignent finalement le composant 32.

Dans le cas où les conditions angulaires de réflexion totale interne dans le substrat 62 sont remplies, la couche 64 n'est plus nécessaire.

La fabrication du dispositif de la figure 10 est plus simple que celle du dispositif de la figure 9 car, dans le cas de la figure 10, il n'est pas nécessaire d'aligner des micro-optiques sur les deux faces du substrat 62.

Pour simplifier la mise en place d'un tel dispositif conforme à l'invention, il est possible "d'aligner" et de monter tous les organes qui le composent en usine et de fournir aux utilisateurs un dispositif scellé et fibré.

La mise en place du dispositif ne nécessite alors que quelques soudures, épissures ou connexions si les fibres de sortie 34 sont dotées de connecteurs optiques.

Il est à noter que les diverses variantes de réalisation de l'invention, qui ont été mentionnées plus haut, peuvent être mises en oeuvre séparément ou en combinaison.

La présente invention englobe toutes les combinaisons possibles de ces variantes.

Les documents qui sont mentionnés dans la présente description sont les suivants :
(1) G. Le Noane, C. Botton, P. Grosso, D. Boscher, I. Hardy, J.C. Bizeul and A. Le Meur, "Bunched multicore monomode fibres (BMMF) : A new key for the future FTTH networks", Optical Fibre Cables and Applications EFOC & N, Genève, 1994
(2) G. Le Noane, P. Grosso et I. Hardy, demande de brevet français n° 9301674 du 15 février 1993, publiée sous le n° FR-A-2701571
(3) EP-A-0611973 correspondant au document (2)
(4) US-A-5,519,801 correspondant aussi au document (2)
(5) Section II "Optical interconnects and switching networks", Proc. Optical Computing, Heriot Watt University, Edinburgh, Août 1994
(6) M.R. Taghizadeh, J.M. Miller, P. Blair and F.A.P. Tooley, "Developing Diffractive Optics for Optical Computing", IEEE Micro, vol.14, n°6, pp 10-19, Decembre 1994
(7) Masayuki Kato et al., "Wavelength independent grating lens system", Applied Optics, vol.28, n°4, pp 682, 686 (1989)
(8) J. Turunen et al., "Storage of multiple images in a thin synthetic Fourier hologram", Optics Communications, vol.84, n°5, 6, pp 383 à 392 (1991)
(9) F. Wyrowski and O. Bryngdahl, "Digital holography as part of diffractive optics", Report on progress in physics, vol.54, n°12, Decembre 1991
(10) Actes du congrès EOS Meetings on Microlens Arrays, National Physics Laboratory, Teddington London, Mai 1993
(11) M.T. Gale, M. Rossi, J. Pedersen and H. Schutz, "Fabrication of continuous-relief micro-optical elements by direct laser writing in photoresists", Optical Engineering, vol.33, Novembre 1994.

## Revendications

1. Dispositif de connexion destiné à connecter une fibre optique multicoeur (12, 28) à un composant optique d'extrémité (16, 32) ou inversement, la fibre comprenant N coeurs (14, 30), N étant un nombre entier au moins égal à 2, le composant optique d'extrémité (16, 32) comprenant P composants optiques élémentaires (18, 34), P étant un nombre entier au moins égal à 2, de manière à établir des liaisons optiques entre les N coeurs et les P composants élémentaires, ce dispositif étant caractérisé en ce qu'il comprend :
- un premier moyen optique (20, 36, 58) qui est réfractif ou diffractif, et
- au moins un deuxième moyen optique (22, 38-40, 66) qui est diffractif,
le premier moyen optique étant apte à faire diverger des faisceaux lumineux sortant des N coeurs jusqu'à une zone où ces faisceaux sont séparés spatialement et ont des sections transversales de tailles compatibles avec la bande passante spatiale du deuxième moyen optique, ce deuxième moyen optique étant placé dans cette zone et étant apte à diriger les faisceaux lumineux, indépendamment les uns des autres, vers les composants élémentaires correspondants.

2. Dispositif selon la revendication 1, caractérisé en ce que le premier moyen optique est une lentille (58).

3. Dispositif selon l'une quelconque des revendications 1 et 2, caractérisé en ce que N est égal à P et en ce que le deuxième moyen optique (22, 38-40, 66) est apte à envoyer la lumière sortant de chaque coeur (14, 28) vers un seul composant élémentaire (18, 34).

4. Dispositif selon l'une quelconque des revendications 1 et 2, caractérisé en ce que le deuxième moyen optique est apte à envoyer la lumière sortant d'au moins l'un des N coeurs vers une pluralité des P composants élémentaires.

5. Dispositif selon l'une quelconque des revendications 1 et 2, caractérisé en ce que le deuxième moyen optique est apte à envoyer la lumière sortant d'au moins deux des N coeurs vers un seul des P composants élémentaires.

6. Dispositif selon l'une quelconque des revendications 1 à 5, caractérisé en ce qu'il comprend en outre au moins un troisième moyen optique (24-26, 42) qui est réfractif ou diffractif et apte à effectuer une adaptation de mode pour le composant optique d'extrémité (16, 32).

7. Dispositif selon la revendication 6, caractérisé en ce que les premier, deuxième et troisième moyens optiques sont respectivement formés sur des substrats (21-23-25-27) indépendants les uns des autres et transparents aux faisceaux lumineux.

8. Dispositif selon la revendication 6, caractérisé en ce que les premier, deuxième et troisième moyens optiques sont groupés par deux, les moyens optique d'un même groupe étant respectivement formés sur deux faces opposées d'un même substrat (44-46) transparent aux faisceaux lumineux.

9. Dispositif selon la revendication 6, caractérisé en ce que les premier, deuxième et troisième moyens optiques sont formés sur un même substrat (62) transparent aux faisceaux lumineux, certains des premier, deuxième et troisième moyens optiques fonctionnant par réflexion de manière à permettre l'établissement d'une liaison optique entre ces premier, deuxième et troisième moyens optiques.

10. Dispositif selon l'une quelconque des revendications 6 à 9, caractérisé en ce que ceux des premier, deuxième et troisième moyens optiques qui sont réfractifs sont choisis dans le groupe comprenant les micro-lentilles et les micro-prismes.

11. Dispositif selon l'une quelconque des revendications 6 à 9, caractérisé en ce que ceux des premier, deuxième et troisièmes moyens optiques qui sont diffractifs sont choisis dans le groupe comprenant les hologrammes analogiques optiques enregistrés dans un matériau photosensible et les hologrammes optiques engendrés par ordinateur.
